# FASCICULE DE BREVET EUROPEEN

(11) **EP 3 109 633 B1**
(45) Date de publication et mention de la délivrance du brevet: **28.03.2018**
(21) Numéro de dépôt: 16169880.8
(22) Date de dépôt: 17.05.2016
(51) Int. Cl.: G01N 27/90

(54) **PROCÉDÉ DE VÉRIFICATION PAR COURANTS DE FOUCAULT**
PRÜFVERFAHREN ANHAND VON WIRBELSTRÖMEN
INVESTIGATION METHOD USING EDDY CURRENTS

(30) Priorité: 25.06.2015 FR 1555844
(43) Date de publication de la demande: 28.12.2016
(73) Titulaire: AIRBUS OPERATIONS (S.A.S), 31060 Toulouse (FR)
(72) Inventeur: SIMONOT, Nicolas, 31300 TOULOUSE (FR)
(74) Mandataire: Gicquel, Olivier Yves Gérard

(56) Documents cités:
- US-A- 2 574 840
- US-A- 5 397 304
- US-A1- 2004 075 432
- US-A1- 2006 076 669
- US-A1- 2011 018 530

## Description

### DOMAINE TECHNIQUE

La présente invention concerne un procédé de vérification de l'intégrité d'une pièce à l'aide d'un outil présentant une sonde à courants de Foucault ainsi qu'un kit d'outillage comprenant un tel outil.

### ETAT DE LA TECHNIQUE ANTERIEURE

La vérification de l'intégrité d'une pièce, en particulier d'une pièce d'aéronef à l'aide d'une sonde à courants de Foucault est régulièrement utilisée car elle permet de réaliser une vérification non-invasive.

Plus particulièrement dans le cas de la vérification appliquée aux inverseurs de poussée d'un moteur d'aéronef, il est nécessaire de démonter les capots de protection pour accéder à la structure des inverseurs de poussée à vérifier.

Cette procédure est donc relativement longue et coûteuse en temps et en main d'oeuvre.

### EXPOSE DE L'INVENTION

Un objet de la présente invention est de proposer un procédé de vérification qui permet de vérifier de manière simple et rapide l'intégrité d'une structure sans qu'il soit nécessaire de démonter les éléments environnants.

A cet effet, est proposé un procédé de vérification de l'intégrité d'une pièce au niveau d'une zone de mesure de ladite pièce à l'aide d'un outil présentant une partie flexible, une partie d'extrémité rigide à la suite de la partie flexible et portant une sonde à courants de Foucault, le procédé comportant :
- une étape de choix au cours de laquelle un gabarit correspondant à ladite zone de mesure est choisi,
- une étape de conformation au cours de laquelle la partie flexible est conformée contre le gabarit ainsi choisi,
- une étape de mise en place au cours de laquelle l'outil ainsi conformé est mis en place pour placer la sonde à courants de Foucault au niveau de ladite zone de mesure, et
- une étape de mesure au cours de laquelle une mesure est effectuée à l'aide de la sonde à courants de Foucault ainsi mise en place.

Un tel procédé de vérification permet ainsi par une étape de conformation d'atteindre les différentes zones de mesure de la pièce à vérifier, procurant ainsi un gain de temps appréciable.

Avantageusement, le procédé de vérification comporte avant l'étape de choix, une étape de réalisation au cours de laquelle le gabarit correspondant à la zone de mesure est fabriqué.

Avantageusement, le passage d'une zone de mesure à une autre consiste à effectuer une rotation de la partie rectiligne de 180° autour de son axe longitudinal.

L'invention propose également un kit d'outillage comprenant un outil présentant une partie flexible, une partie d'extrémité rigide à la suite de la partie flexible et portant une sonde à courants de Foucault, et un ensemble de gabarit agencé pour conformer la partie flexible.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue en perspective d'une structure d'un inverseur de poussée d'un moteur d'aéronef, pour lequel le procédé de vérification selon l'invention est mis en oeuvre,
la Fig. 2 est une vue en coupe de la structure de l'inverseur de poussée selon le plan II de la Fig. 1,
la Fig. 3 montre un premier exemple d'une mise en conformation d'un outil à sonde à courants de Foucault selon l'invention,
la Fig. 4 montre un deuxième exemple d'une mise en conformation de l'outil, et
la Fig. 5 est un organigramme du procédé de vérification selon l'invention.

### EXPOSE DETAILLE DE MODES DE REALISATION

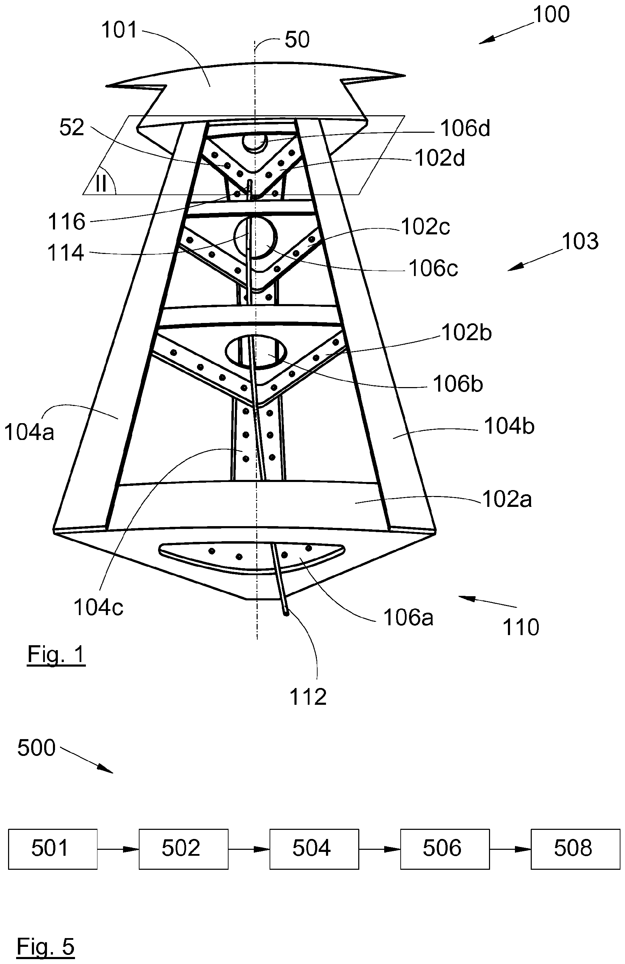

La Fig. 1 montre un inverseur de poussée 100 d'un moteur d'aéronef L'inverseur 100 présente un volet 101 et une structure 103 à l'une des extrémités de laquelle le volet 101 est fixé. La structure 103 présente une forme allongée parallèlement à un axe longitudinal 50. La structure 103 se présente sous la forme d'une pluralité de cadres 102a-d assemblés sur trois longerons 104a-c parallèles à l'axe longitudinal 50. La fixation est réalisée par soudure et/ou par mise en place de systèmes vis-écrou 52.

Chaque cadre 102a-d présente une ouverture 106a-d qui permet, entre autres, le passage de câbles électriques le long de la structure 103.

Les ouvertures 106a-d permettent également l'introduction d'un outil 110 présentant une sonde à courants de Foucault (« Eddy current probe » en terminologie anglo-saxonne) afin d'atteindre le cadre 102d le plus proche du volet 101 et ainsi vérifier son intégrité.

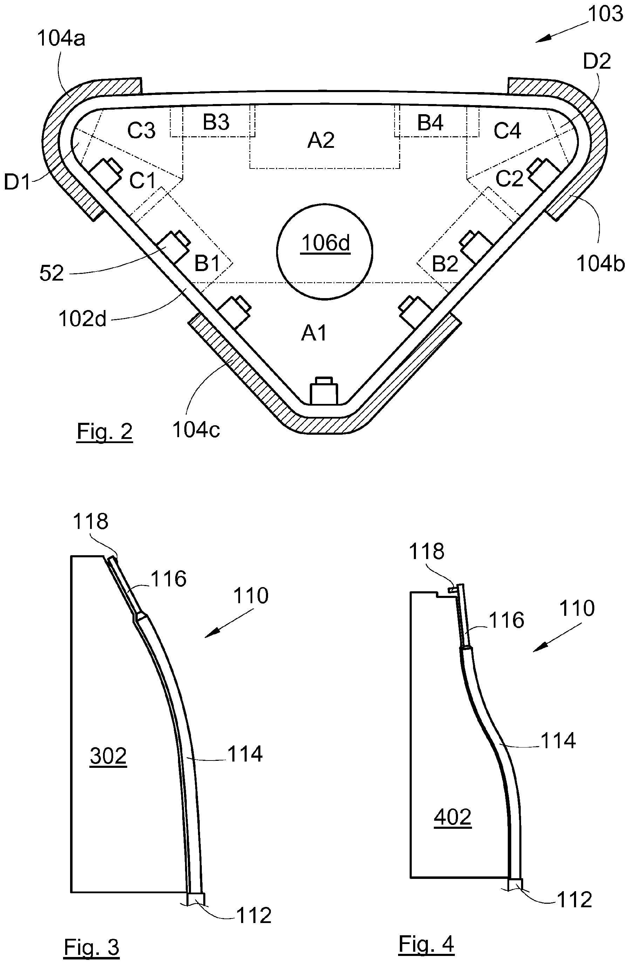

La Fig. 2 montre la structure 103 en coupe en face du cadre 102d le plus proche du volet 101, par le plan II qui est perpendiculaire à l'axe longitudinal 50.

Le cadre 102d délimite un espace intérieur qui est virtuellement divisé en plusieurs zones de mesure délimitées ici par des traits mixtes fins. Les zones de mesures sont référencées A1-2, B1-4, C1-4 et D1-2 et sont les zones au niveau desquelles la sonde à courants de Foucault est appliquée pour effectuer les mesures et ainsi vérifier l'intégrité du cadre 102d.

Du fait de la symétrie du cadre 102d, les zones de mesures sont également symétriques. Pour être certain de couvrir tout le cadre 102d, les zones de mesures se chevauchent de proche en proche.

La vérification de l'intégrité du cadre 102d consiste à poser la sonde à courants de Foucault 110 le long de toutes les surfaces du cadre 102d en passant d'une zone de mesure à une autre. La mesure donnée par la sonde à courants de Foucault au niveau d'une zone de mesure permet alors de vérifier l'intégrité du cadre 102d au niveau de cette zone de mesure.

La Fig. 3 montre une mise en forme de l'outil 110 pour atteindre les zones référencées B1 et B4, et la Fig. 4 montre une mise en forme de l'outil 110 pour atteindre les zones référencées D1 et D2.

L'outil 110 présente une partie rectiligne et rigide 112 permettant la prise en main par un technicien, une partie flexible 114 à la suite de la partie rectiligne 112 et une partie d'extrémité rigide 116 à la suite de la partie flexible 114 et portant la sonde à courants de Foucault 118.

Pour chaque zone de mesure, un gabarit 302, 402 est prévu. Le gabarit 302, 402 présente la forme que doit prendre la partie flexible 114 pour permettre la mise en place de la sonde à courants de Foucault 118 contre la surface du cadre 102d de la zone de mesure associée au gabarit 302, 402. Ainsi, dans le cas de la Fig. 3, la partie flexible 114 présente une simple courbure, et dans le cas de la Fig. 4, la partie flexible 114 présente une double courbure. Le gabarit 302, 402 est réalisé dans un matériau suffisamment rigide pour ne pas se déformer sous pression de la partie flexible 114. Chaque gabarit est dépendant des différentes zones de mesure de la structure 103 à vérifier et la mise en place de gabarits 302 et 402 permet une meilleure répétabilité des mesures. Un gabarit 302, 402 correspond à une zone de mesure lorsqu'il permet d'orienter la partie flexible 114 en fonction de la zone de mesure à atteindre pour la sonde à courants de Foucault 118.

Lorsque la partie flexible 114 a été conformée, il suffit alors d'appliquer la sonde à courants de Foucault 118 contre la surface de la zone de mesure. Dans le cas de la Fig. 3, la partie flexible 114 est conformée pour les zones de mesure B1 et B4.

Selon les zones de mesure, il est possible de passer d'une zone à l'autre en effectuant une rotation de la partie rectiligne 112 de 180° autour de son axe longitudinal.

La conformation de la partie flexible 114 permet d'accéder facilement à toutes les parties de la structure 103 devant être vérifiées. En particulier, dans le cas d'un inverseur de poussée 100, il n'est pas nécessaire de retirer les capots de protection.

L'élément flexible 114 est suffisamment souple pour être facilement conformé par un technicien par appui contre le gabarit 302, 402, et suffisamment rigide pour conserver sa forme après sa conformation sans intervention du technicien. L'élément flexible 114 est par exemple du type câble flexible constitué d'éléments articulés.

La Fig. 5 présente un algorithme d'un procédé de vérification 500 de l'intégrité d'une pièce (ici le cadre 102d) au niveau d'une zone de mesure de ladite pièce, le procédé comportant :
- une étape de choix 502 au cours de laquelle un technicien choisit un gabarit 302, 402 correspondant à ladite zone de mesure,
- une étape de conformation 504 au cours de laquelle le technicien conforme la partie flexible 114 contre le gabarit 302, 402 ainsi choisi,
- une étape de mise en place 506 au cours de laquelle le technicien met en place l'outil 110 ainsi conformé de manière à placer la sonde à courants de Foucault 118 au niveau de ladite zone de mesure, et
- une étape de mesure 508 au cours de laquelle le technicien effectue une mesure à l'aide de la sonde à courants de Foucault 118 ainsi mise en place.

Selon un mode de réalisation particulier, le procédé de vérification 500 comporte avant l'étape de choix 502, une étape de réalisation 501 au cours de laquelle le gabarit 302, 402 correspondant à la zone de mesure A1-2, B1-4, C1-4, D1-2 est fabriqué en fonction de la géométrie de la zone de mesure A1-2, B1-4, C1-4, D1-2 à atteindre.

L'étape de mesure 508 s'effectue à l'aide d'un appareil de mesure approprié. A cette fin, des conducteurs électriques courent le long de l'outil 110 depuis la sonde à courants de Foucault 118 jusqu'à l'appareil de mesure.

L'ensemble des gabarits 302, 402 et l'outil 110 présentant la sonde à courants de Foucault 118 forment un kit d'outillage.

## Revendications

1. Procédé de vérification (500) de l'intégrité d'une pièce (102d) au niveau d'une zone de mesure (A1-2, B1-4, C1-4, D-2) de ladite pièce (102d) à l'aide d'un outil (110) présentant une partie flexible (114), une partie d'extrémité rigide (116) à la suite de la partie flexible (114) et portant une sonde à courants de Foucault (118), le procédé comportant :
- une étape de choix (502) au cours de laquelle un gabarit (302, 402) correspondant à ladite zone de mesure est choisi,
- une étape de conformation (504) au cours de laquelle la partie flexible (114) est conformée contre le gabarit (302, 402) ainsi choisi,
- une étape de mise en place (506) au cours de laquelle l'outil (110) ainsi conformé est mise en place pour placer la sonde à courants de Foucault (118) au niveau de ladite zone de mesure, et
- une étape de mesure (508) au cours de laquelle une mesure est effectuée à l'aide de la sonde à courants de Foucault (110) ainsi mise en place.

2. Procédé de vérification (500) selon la revendication 1, **caractérisé en ce qu'**il comporte avant l'étape de choix (502), une étape de réalisation (501) au cours de laquelle le gabarit (302, 402) correspondant à la zone de mesure (A1-2, B1-4, C1-4, D1-2) est fabriqué.

3. Procédé de vérification (500) selon l'une des revendications 1 ou 2, **caractérisé en ce que** le passage d'une zone de mesure à une autre consiste à effectuer une rotation de la partie rectiligne (112) de 180° autour de son axe longitudinal.

4. Kit d'outillage comprenant un outil (110) présentant une partie flexible (114), une partie d'extrémité rigide (116) à la suite de la partie flexible (114) et portant une sonde à courants de Foucault (118), et un ensemble de gabarit (302, 402) agencé pour conformer la partie flexible (114).

## Patentansprüche

1. Prüfverfahren (500) der Unversehrtheit eines Bauteils (102d) im Bereich einer Messzone (A1-2, B1-4, C1-4, D1-2) des Bauteils (102d) mit Hilfe eines Werkzeugs (110), das einen biegsamen Teil (114), einen steifen Endteil (116) nach dem biegsamen Teil (114) und eine Wirbelstromsonde (118) tragend aufweist, wobei das Verfahren aufweist:
- einen Auswahlschritt (502), während dessen eine der Messzone entsprechende Schablone (302, 402) ausgewählt wird,
- einen Anpassungsschritt (504), während dessen der biegsame Teil (114) gegen die so gewählte Schablone (302, 402) angepasst wird,
- einen Einsetzschritt (506), während dessen das so angepasste Werkzeug (110) eingesetzt wird, um die Wirbelstromsonde (118) im Bereich der Messzone anzuordnen, und
- einen Messschritt (508), während dessen eine Messung mit Hilfe der so eingesetzten Wirbelstromsonde (110) durchgeführt wird.

2. Prüfverfahren (500) nach Anspruch 1, **dadurch gekennzeichnet, dass** es vor dem Auswahlschritt (502) einen Herstellungsschritt (501) aufweist, während dessen die der Messzone (A1-2, B1-4, C1-4, D1-2) entsprechende Schablone (302, 402) hergestellt wird.

3. Prüfverfahren (500) nach einem der Ansprüche 1 oder 2, **dadurch gekennzeichnet, dass** der Übergang von einer Messzone zu einer anderen darin besteht, eine Drehung des geradlinigen Teils (112) um 180° um seine Längsachse durchzuführen.

4. Werkzeugbausatz, der ein Werkzeug (110), das einen biegsamen Teil (114), einen steifen Endteil (116) nach dem biegsamen Teil (114) und eine Wirbelstromsonde (118) tragend aufweist, und eine Schabloneneinheit (302, 402) enthält, die eingerichtet ist, um den biegsamen Teil (114) anzupassen.

## Claims

1. Method (500) for testing the integrity of a component (102d) in a measurement area (A1 - 2, B1 - 4, C1 - 4, D1 - 2) of said component (102d), using an instrument (110) having a flexible part (114) and a rigid end part (116) following the flexible part (114) and carrying an eddy current probe (118), the method comprising:
- a selection step (502) in which a template (302, 402) corresponding to said measurement area is selected,
- a shaping step (504) in which the flexible part (114) is shaped against the template (302, 402) thus selected,
- a positioning step (506), in which the instrument (110) thus shaped is positioned so that the eddy current probe (118) is placed in said measurement area, and
- a measurement step (508), in which a measurement is made by means of the eddy current probe (110) which has been thus positioned.

2. Test method (500) according to Claim 1, wherein it comprises, before the selection step (502), a production step (501) in which the template (302, 402) corresponding to the measurement area (A1 - 2, B1 - 4, C1 - 4, D1 - 2) is fabricated.

3. Test method (500) according to either of Claims 1 and 2, wherein the movement from one measurement area to another consists in rotating the straight part (112) through 180° about its longitudinal axis.

4. Toolkit comprising an instrument (110) having a flexible part (114), a rigid end part (116) following the flexible part (114) and carrying an eddy current probe (118), and a set of templates (302, 402) arranged to shape the flexible part (114).
